(19) **Europäisches Patentamt European Patent Office Office européen des brevets**

(11) **EP 2 847 532 B1**

(12) **EUROPEAN PATENT SPECIFICATION**

(45) Date of publication and mention of the grant of the patent:
**13.03.2019 Bulletin 2019/11**

(21) Application number: **13787240.4**

(22) Date of filing: **08.05.2013**

(51) Int Cl.:
*B08B 7/02* (2006.01)　　　*C22B 15/00* (2006.01)
*F27B 1/10* (2006.01)　　　*F27B 1/24* (2006.01)
*F27B 1/26* (2006.01)　　　*F27D 25/00* (2010.01)

(86) International application number:
**PCT/FI2013/050509**

(87) International publication number:
**WO 2013/167810 (14.11.2013 Gazette 2013/46)**

(54) **METHOD AND ARRANGEMENT FOR REMOVING OUTGROWTH IN A SUSPENSION SMELTING FURNACE**

VERFAHREN UND ANORDNUNG ZUR ENTFERNUNG VON AUSWÜCHSEN IN EINEM FLAMMSCHMELZOFEN

PROCÉDÉ ET AGENCEMENT POUR RETIRER UNE EXCROISSANCE DANS UN FOUR DE FUSION DE SUSPENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2012 FI 20125499**

(43) Date of publication of application:
**18.03.2015 Bulletin 2015/12**

(73) Proprietor: **Outotec (Finland) Oy**
**02230 Espoo (FI)**

(72) Inventors:
 • **BJÖRKLUND, Peter**
 **02360 Espoo (FI)**
 • **LAANINEN, Aki**
 **06900 Helsinki (FI)**

 • **PELTONIEMI, Kaarle**
 **02970 Espoo (FI)**
 • **PESONEN, Lauri**
 **00100 Helsinki (FI)**

(74) Representative: **Boco IP Oy Ab**
**Itämerenkatu 5**
**00180 Helsinki (FI)**

(56) References cited:
| | |
|---|---|
| EP-A1- 1 258 462 | WO-A1-2011/070239 |
| WO-A1-2012/001238 | WO-A1-2012/001238 |
| DE-B1- 2 147 251 | JP-A- S 589 945 |
| KR-B1- 100 763 295 | US-A1- 2004 012 130 |
| US-A1- 2009 085 263 | US-A1- 2010 108 340 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The invention relates to a method for removing outgrowth in a suspension smelting furnace as defined in independent claim 1.

The invention also relates to an arrangement for removing outgrowth in a suspension smelting furnace as defined in independent claim 9.

Outgrowth comprising for example partially melted fine solids fed by the concentrate burner of a suspension smelting furnace may be built-up in the interior of a reaction shaft of a suspension smelting furnace reaction shaft, especially in the uppermost part of the interior of the reaction shaft in the vicinity of the concentrate burner. Such outgrowth has a negative effect on the suspension smelting process.

It is known in the art to manually remove such outgrowth manually. For this purpose, the reaction shaft can be provided with openings. This manual work is however both dirty and physically exhausting.

Publication WO 2012/001238 presents a suspension smelting furnace comprising a reaction shaft having a reaction shaft structure, a lower furnace, an uptake, and a concentrate burner for feeding at least reaction gas and fine solids such as copper or nickel concentrate into the reaction shaft of the suspension smelting furnace as well as at least one opening for an outgrowth removal means in a cooling block between the a reaction shaft structure and the concentrate burner.

### Objective of the invention

The object of the invention is to provide a method and an arrangement for removing outgrowth in a suspension smelting furnace.

### Short description of the invention

The method for removing outgrowth in a suspension smelting furnace is characterized by the definitions of independent claim 1.

Preferred embodiments of the method are defined in the dependent claims 2 to 8.

The method for removing outgrowth in a suspension smelting furnace of the invention is correspondingly characterized by the definitions of independent claim 9.

Preferred embodiments of the arrangement are defined in the dependent claims 10 to 16.

The method for removing outgrowth in a suspension smelting furnace comprises providing the reaction shaft with at least one opening for an outgrowth removal means. The method comprises additionally providing at least one outgrowth removal means having a movable piston, and arranging a movable piston of at least one outgrowth removal means such that the movable piston of at least one outgrowth removal means can move in the opening in the reaction shaft and into the reaction shaft, and moving the movable piston of at least one outgrowth removal means into the reaction shaft to push possible outgrowth in the reaction shaft by means of the movable piston of said at least one outgrowth removal means to detach possible outgrowth in the reaction shaft and to cause possible outgrowth to fall in the reaction shaft.

In the arrangement for removing outgrowth in a suspension smelting furnace, the reaction shaft comprises at least one opening for an outgrowth removal means. The arrangement comprises additionally at least one outgrowth removal means having a movable piston that is arranges such that the movable piston of said at least one outgrowth removal means can move in the opening in the reaction shaft and into the reaction shaft to push possible outgrowth in the reaction shaft by means of the movable piston of said at least one outgrowth removal means to detach possible outgrowth in the reaction shaft and to cause possible outgrowth to fall in the reaction shaft.

The method and the arrangement provides for several advantages. When the ignition zone moves further down the furnace due to outgrowth buildup in the vicinity of the concentrate burner, the volume and height of the reaction shaft is not utilized and efficiency drops. This causes a drop in oxygen utilization efficiency of the furnace.

Outgrowth buildup may also be formed unevenly the concentrate burner. The result of such uneven outgrowth buildup will be that the oxidizing conditions in the reaction shaft will vary so that in the reaction shaft will be created both vertical sections having over-oxidizing conditions i.e. a vertical section containing more oxygen than needed for the reactions and section having under-oxidizing conditions i.e. a vertical section containing less little oxygen than needed for the reactions and vertical sections having lower temperatures than other sections. In the different vertical sectors in the reactions shaft different amounts of magnetite ($Fe_3O_4$) will be created in the reaction shaft. This has a decremental effect on settler slag quality, for example Cu/Ni losses may be higher. If a varying magnetite ($Fe_3O_4$) is formed from the reaction shaft, it may also create a varying autogeneous (protective) layer in the settler walls and roof. A too thick autogeneous layer will reduce the melt holding capacity of the furnace and a too thin autogeneous layer will reduce the lifetime of the furnace.

It is therefore important to regularly ensure that the buildup situation and to avoid outgrowth buildup. This can be achieved by automatically forcing the pistons to move with regular intervals, suitable interval is 1 - 2 times/h, thereby pushing on the buildup and causing it to break and fall into the reaction shaft.

Heat losses in coolant circulating in a cooling block fastened at the top of the reaction shaft and having an aperture through which the concentrate burner extends through into the reactions shaft can be used to monitor outgrowth buildup formation. The cooling block may divided into a number of horizontal sections each having a channel for coolant fluid and each block being provided with coolant circulating means for circulating coolant fluid in the channel. In such case at least one coolant circulating means is provided with temperature measuring means for measuring the temperature of the coolant fluid that is fed into the channel of the horizontal section and correspondingly with temperature measuring means for measuring the temperature of the coolant fluid that is discharged from the channel of the horizontal section outlet temperature. Said at least one coolant circulating means is provided with temperature measuring means and is additionally provided with coolant fluid flow measurement means. By using the results of the temperature and flow measurement, a heat loss calculation can be made for said at least one horizontal section for example by using the following equation

$$Q = cp * V_{out} * ro * (T_{in} - T_{out}) \qquad (1)$$

Where

Q is the heat loss,
cp is the heat capacity of the coolant fluid,
$V_{out}$ is the volumetric flow of the coolant fluid,
ro is the density of the coolant fluid,
$T_{in}$ is the temperature of the coolant fluid that is fed into the channel, and
$T_{out}$ is the temperature of the coolant fluid that is discharged from the channel.

When there is buildup formation at said at least one horizontal section of the cooling block, the calculated heat loss drops. When the heat loss for a certain section has dropped below a set threshold either as an absolute set value or as a calculated value based on averages or maximum or combination of these, the movable pistons of the outgrowth removal means are moved into the reaction shaft of the suspension smelting furnace and then withdrawn, causing the buildup in this section to drop into the reaction shaft.

**List of figures**

In the following the invention will described in more detail by referring to the figures, which

Figure 1 a suspension smelting furnace,
Figure 2 is a detail view of an embodiment of an arrangement for removing outgrowth in a suspension smelting furnace,
Figure 3 shows a cooling block that is provided with eight openings for a maximum of eight outgrowth removal means,
Figure 4 shows a part of an embodiment that is provided with a control arrangement for actuating at least one outgrowth removal means based on heat loss in coolant fluid that is fed into a coolant channels in a cooling block and that is discharged from the coolant channel of the cooling block, and
Figure 5 shows a part of an embodiment that is provided with a control arrangement for actuating at least one outgrowth removal means based on heat loss in a coolant fluid that is fed into a coolant channels in a cooling block and coolant fluid that is discharged from the coolant channel of the cooling block.

**Detailed description of the invention**

The invention relates to a method for removing outgrowth in a suspension smelting furnace and to an arrangement for removing outgrowth in a suspension smelting furnace.

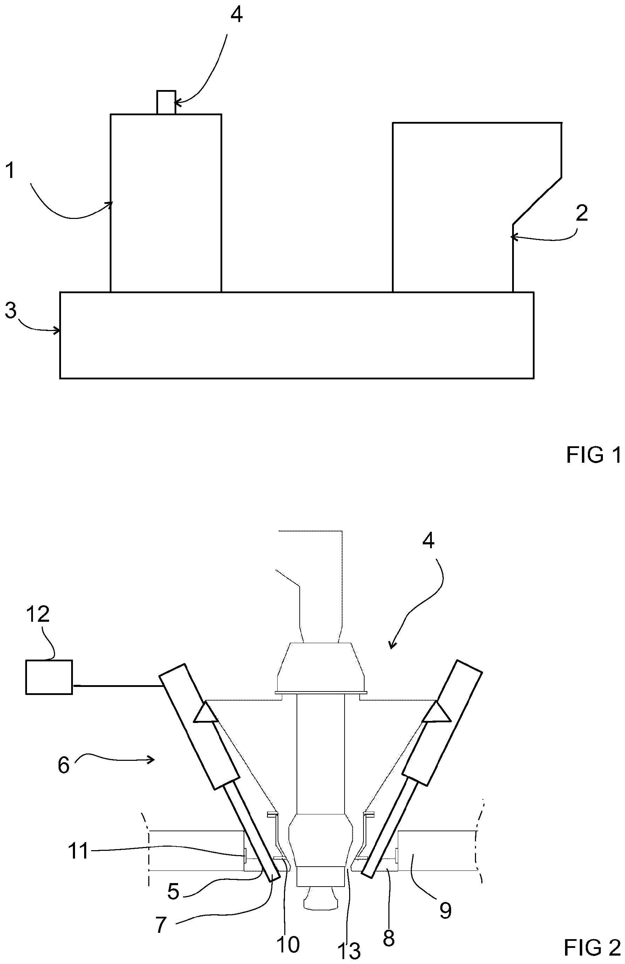

Fig. 1 shows a suspension smelting furnace which comprises a reaction shaft 1, an uptake 2, and a lower furnace 3, as well as a concentrate burner 4 for feeding reaction gas (not shown in the figures) and fine solids (not shown) such as concentrate, preferable copper or nickel concentrate, matte and/or flux into the reaction shaft 1. The operation of such a suspension smelting furnace is for example described in the Finnish patent publication FI22694.

First the method for removing outgrowth in a suspension smelting furnace and preferred embodiments and variants thereof will be describer in greater detail.

The suspension smelting furnace in the method comprises a reaction shaft 1 having a reaction shaft structure 9, and a concentrate burner 4 for feeding at least reaction gas and fine solids such as copper or nickel concentrate into the reaction shaft 1 of the suspension smelting furnace.

The method comprises providing the reaction shaft 1 with at least one opening 5 for an outgrowth removal means 6.

The method comprises providing at least one outgrowth removal means 6 having a movable piston 7.

The method comprises arranging the movable piston 7 of at least one outgrowth removal means 6 such that the movable piston 7 of said at least one outgrowth removal means 6 can move in the opening 5 in the reaction shaft 1 and into the reaction shaft 1 i.e. into the interior (not marked with a reference numeral) of the reaction shaft 1.

The method comprises moving the movable piston 7 into the reaction shaft 1 to push possible outgrowth in the reaction shaft 1 by means of the movable piston 7 of said at least one outgrowth removal means 6, preferably to push outgrowth present in the reaction shaft 1 by means of the movable piston 7 of said at least one outgrowth removal means 6.

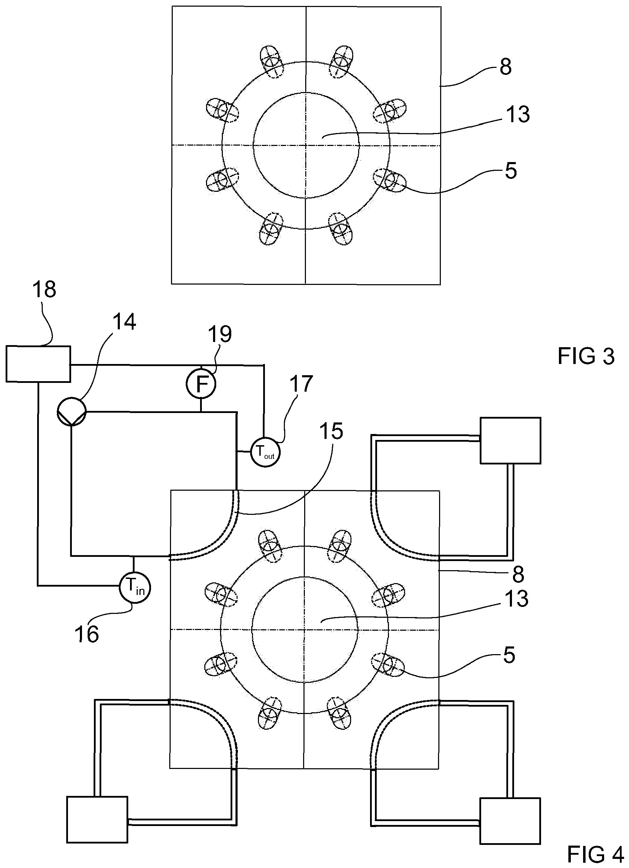

The method comprises providing a cooling block 8 having an aperture 13 for the concentrate burner 4 and first fastening means 10 for fastening the concentrate burner 4 to the cooling block 8 and second fastening means 11 for fastening the cooling block 8 at the top of the reaction shaft 1 of the suspension smelting furnace. The method comprises additionally providing the cooling block 8 with at least one opening 5 for the movable piston 7 of at least one outgrowth removal means 6. The method comprises additionally fastening the cooling block 8 at the top of the reaction shaft 1 of the reaction shaft 1 of the suspension smelting furnace so that the cooling block 8 is fastened to the reaction shaft structure 9 of the reaction shaft 1 of the suspension smelting furnace by using the second fastening means 11 and so that the cooling block 8 is fastened to the concentrate burner 4 by using the first fastening means 10 and so that the concentrate burner 4 extends into the reaction shaft 1. The cooling block can for example be made of copper or comprise copper. Figure 3 shows a cooling block 8 having in total eight openings 5 for eight movable pistons 7 of eight outgrowth removal means 6.

The method comprises providing a cooling block 8 as described above, and providing a coolant circulating means 14 for circulating coolant fluid (not shown in the drawings) in at least one channel 15 in the cooling block 8. The method comprises circulating coolant in said at least one channel 15 in the cooling block 8 by feeding coolant fluid into said at least one channel 1) and by discharging coolant fluid from said at least one channel 15. The method comprises measuring the temperature ($T_{in}$) of coolant fluid that is fed into said at least one channel 15, measuring the temperature ($T_{out}$) of coolant fluid that is discharged from said at least one channel 15, and measuring the volumetric flow ($V_{out}$) of the coolant fluid in said at least one channel 15. The method comprises calculating the heat loss (Q) of the coolant fluid in said at least one channel 15 in the cooling block 8 by using the temperature ($T_{in}$) of coolant fluid that is fed into said at least one channel 15, the temperature ($T_{out}$) of coolant fluid that is discharged from said at least one channel 15, and the volumetric flow ($V_{out}$) of the coolant fluid in said at least one channel 15 and controlling the outgrowth removal means 6 based on the calculated heat loss (Q).

The heat loss (Q) can for example be calculated by the following equation:

$$Q=cp*V_{out}*ro*(T_{in}-T_{out}) \tag{1}$$

where

Q is the heat loss,
cp is the heat capacity of the coolant fluid,
$V_{out}$ is the volumetric flow of the coolant fluid,
ro is the density of the coolant fluid,
$T_{in}$ is the temperature of the coolant fluid that is fed into the channel, and
$T_{out}$ is the temperature of the coolant fluid that is discharged from the channel.

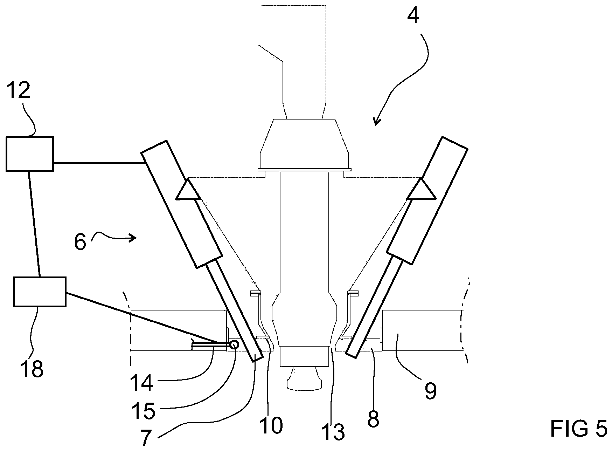

In the arrangement shown in figures 4 and 5 the cooling block 8 can be considered to be divided into four horizontal sector (not marked with a reference numeral) each horizontal sector having a channel 15 for coolant fluid. Each of these horizontal sectors may be provided with first temperature measuring means 16, second temperature measuring means 17, and flow measurement means 19 for independently calculating the heat loss (Q) within each horizontal sector.

The method comprises calculating the heat loss (Q) of the coolant fluid in said at least one channel 15 in the cooling block 8 by using the temperature ($T_{in}$) of coolant fluid that is fed into said at least one channel 15, the temperature ($T_{out}$) of coolant fluid that is discharged from said at least one channel 15, and the volumetric flow ($V_{out}$) of the coolant fluid in said at least one channel 15 and controlling the outgrowth removal means 6 based on the calculated heat loss (Q) as described above, and comprises preferably, but not necessarily, by moving the movable piston 7 of at least one outgrowth removal means 6 into the reaction shaft 1 to push possible outgrowth in the reaction shaft 1 by means of the movable piston 7 of said at least one outgrowth removal means 6 if the calculated heat loss (Q) goes below a pre-set value ($Q_{set}$).

The method comprises calculating the heat loss (Q) of the coolant fluid in said at least one channel 15 in the cooling block 8 by using the temperature ($T_{in}$) of coolant fluid that is fed into said at least one channel 15, the temperature ($T_{out}$) of coolant fluid that is discharged from said at least one channel 15, and the volumetric flow ($V_{out}$) of the coolant fluid in said at least one channel 15 and controlling the outgrowth removal means 6 based on the calculated heat loss (Q) as described above, and comprises preferably, but not necessarily, moving the movable piston 7 of at least one outgrowth removal means 6 into the reaction shaft 1 to push possible outgrowth in the reaction shaft 1 by means of the movable piston 7 of said at least one outgrowth removal means 6 if an average heat loss ($Q_{ave}$) calculated by using several calculated heat losses (Q) goes below a pre-set average value ($Q_{aveset}$).

The method comprises preferably providing at least one opening 5 for a movable piston 7 of at least one outgrowth removal means 6 adjacent to the concentrate burner 4 at the top of the interior of the reaction shaft 1 of the suspension smelting furnace.

The method may comprise an attachment step for attaching the outgrowth removal means 6 to the concentrate burner 4 as is shown in figure 2.

The method may comprise using a pneumatic cylinder-piston-arrangement in at least one outgrowth removal means 6 for moving the movable piston 7 of said at least one outgrowth removal means 6.

The method may comprise using a linear actuator such as a mechanical actuator, a hydraulic actuator, or a pneumatic actuator in at least one outgrowth removal means 6 for moving the movable piston 7 of at least one outgrowth removal means.

The method may comprise providing the outgrowth removal means 6 with a control arrangement 12 for actuating at least one outgrowth removal means 6 to move the movable piston 7 of at least one outgrowth removal means 6 into the reaction shaft 1 for example with regular time-intervals.

Next the arrangement for removing outgrowth in a suspension smelting furnace and preferred embodiments and variants thereof will be describer in greater detail.

The suspension smelting furnace in the arrangement comprises a reaction shaft 1 having a reaction shaft structure 9, and a concentrate burner 4 for feeding at least reaction gas and fine solids such as copper or nickel concentrate into the reaction shaft 1 of the suspension smelting furnace.

The reaction shaft 1 comprises at least one opening 5 for an outgrowth removal means 6.

The arrangement comprises at least one outgrowth removal means 6 having a movable piston 7. The movable piston 7 of at least one outgrowth removal means 6 is arranged such that the movable piston 7 of said at least one outgrowth removal means 6 can move in the opening 5 in the reaction shaft 1 and into the reaction shaft 1 to push possible outgrowth in the reaction shaft 1 by means of the movable piston 7 of said at least one outgrowth removal means 6, preferably to push outgrowth present in the reaction shaft 1 by means of the movable piston 7 of said at least one outgrowth removal means 6.

The arrangement comprises a cooling block 8 having an aperture 13 for the concentrate burner 4 and first fastening means 10 for fastening the concentrate burner 4 to the cooling block 8 and second fastening means 11 for fastening the cooling block 8 at the top of the reaction shaft 1 of the suspension smelting furnace. The cooling block 8 is provided with at least one opening 5 for at least one movable piston 7 of at least one outgrowth removal means 6. The cooling block 8 is arranged at the top of the interior of the reaction shaft 1 of the reaction shaft 1 of the suspension smelting furnace so that the cooling block 8 is fastened to the reaction shaft structure 9 of the reaction shaft 1 of the suspension smelting furnace by using the second fastening means 11 and to the concentrate burner 4 by using the first fastening means 10 and so that the concentrate burner 4 extends into the reaction shaft 1. The cooling block can for example be made of copper or comprise copper. Figure 3 shows a cooling block 8 having in total eight openings 5 for eight movable pistons 7 of eight outgrowth removal means 6.

The arrangement comprises a cooling block 8 as described above, and coolant circulating means 14 for circulating coolant fluid in at least one channel 15 in the cooling block 8 by feeding coolant fluid into said at least one channel 15 and by discharging coolant fluid from said at least one channel 15. The arrangement comprises first temperature measuring means 16 for measuring the temperature ($T_{in}$) of coolant fluid that is fed into said at least one channel 15 and arrangement comprises second temperature measuring means 17 for measuring the temperature ($T_{out}$) of coolant fluid that is discharged from said at least one channel 15. The arrangement is in addition to the first temperature measuring means 16 and to the second temperature measuring means 17 provided with flow measuring means 19 for measuring the volumetric flow $V_{out}$ of coolant fluid in said at least one channel 15. The arrangement comprises calculating means

18 for calculating heat loss (Q) by using the temperature ($T_{in}$) of coolant fluid that is fed into said at least one channel 15, the temperature ($T_{out}$) of coolant fluid that is discharged from said at least one channel 15, and the volumetric flow ($V_{out}$) of the coolant fluid in said at least one channel 15 for example by the following equation:

$$Q=cp*V_{out}*ro*(T_{in}-T_{out}) \tag{1}$$

where

Q is the heat loss,
cp is the heat capacity of the coolant fluid,
$V_{out}$ is the volumetric flow of the coolant fluid,
ro is the density of the coolant fluid,
$T_{in}$ is the temperature of the coolant fluid that is fed into the channel, and
$T_{out}$ is the temperature of the coolant fluid that is discharged from the channel.

The arrangement comprises a control arrangement 12 controlling the outgrowth removal means 6 based on the calculated heat loss (Q) calculated by the calculating means 18. In the arrangement shown in figures 4 and 5 the cooling block 8 can be considered to be divided into four horizontal sector (not marked with a reference numeral) each horizontal sector having a channel 15 for coolant fluid. Each of these horizontal sectors may be provided with first temperature measuring means 16 for measuring the temperature ($T_{in}$) of coolant fluid that is fed into the channel 15 and arrangement comprises second temperature measuring means 17 for measuring the temperature ($T_{out}$) of coolant fluid that is discharged from the channel 15 for independently calculating the calculated heat loss (Q) within each horizontal sector.

The arrangement comprises a control arrangement 12 for controlling the outgrowth removal means 6 based on the heat loss (Q) calculated by the calculating means 18 as described above, and the control arrangement 12 is configured for controlling the outgrowth removal means 6 by moving the movable piston 7 of at least one outgrowth removal means 6 into the reaction shaft 1 to push possible outgrowth in the reaction shaft 1 by means of the movable piston 7 of said at least one outgrowth removal means 6 if the calculated heat loss (Q) goes below a pre-set value ($Q_{set}$).

The arrangement comprises a control arrangement 12 for controlling the outgrowth removal means 6 based on the heat loss (Q) calculated by the calculating means 18 as described above, and the control arrangement 12 is preferably, but not necessarily, configured for controlling the outgrowth removal means 6 by moving the movable piston 7 of at least one outgrowth removal means 6 into the reaction shaft 1 to push possible outgrowth in the reaction shaft 1 by means of the movable piston 7 of said at least one outgrowth removal means 6 if an heat loss ($Q_{ave}$) calculated by using several calculated heat losses (Q) goes below a pre-set average value ($Q_{aveset}$).

In the arrangement at least one opening 5 for a movable piston 7 of an outgrowth removal means 6 is preferably, but not necessarily, provided adjacent to the concentrate burner 4 at the top of the interior of the reaction shaft 1 of the suspension smelting furnace.

In the arrangement the outgrowth removal means 6 is preferably, but not necessarily, attached to the concentrate burner 4.

In the arrangement the outgrowth removal means 6 comprises preferably, but not necessarily, a pneumatic cylinder-piston-arrangement in the outgrowth removal means 6 for moving the movable piston 7.

In the arrangement the outgrowth removal means 6 comprises preferably, but not necessarily, a linear actuator such as a mechanical actuator, a hydraulic actuator, or a pneumatic actuator in the outgrowth removal means 6 for moving the movable piston 7.

In the arrangement the outgrowth removal means 6 comprises preferably, but not necessarily, a control arrangement 12 for actuating the outgrowth removal means 6 to moving the movable piston 7 into the reaction shaft 1 for example with regular time-intervals.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for removing outgrowth in a suspension smelting furnace comprising a reaction shaft (1) having a reaction shaft structure (9), and a concentrate burner (4) for feeding at least reaction gas and fine solids such as copper or nickel concentrate into the reaction shaft (1) of the suspension smelting furnace, wherein the method comprises providing the reaction shaft (1) with at least one opening (5) for an outgrowth removal means (6),

providing at least one outgrowth removal means (6) having a movable piston (7),

by arranging the movable piston (7) of at least one outgrowth removal means (6) such that the movable piston (7) of said at least one outgrowth removal means (6) can move in the opening (5) in the reaction shaft (1) and into the reaction shaft (1),

moving the movable piston (7) of at least one outgrowth removal means (6) into the reaction shaft (1) to push possible outgrowth in the reaction shaft (1) by means of the movable piston (7) of said at least one outgrowth removal means (6),

providing a cooling block (8) having an aperture (13) for the concentrate burner (4) and first fastening means (10) for fastening the concentrate burner (4) to the cooling block (8) and second fastening means (11) for fastening the cooling block (8) at the top of the reaction shaft (1) of the suspension smelting furnace,

providing the cooling block (8) with at least one opening (5) for a movable piston (7) of an outgrowth removal means (6),

fastening the cooling block (8) at the top of the reaction shaft (1) of the suspension smelting furnace so that the cooling block (8) is fastened to the reaction shaft structure (9) of the reaction shaft (1) of the suspension smelting furnace by using the second fastening means (11) and to the concentrate burner (4) by using the first fastening means (10) and so that the concentrate burner (4) extends into the reaction shaft (1),

providing coolant circulating means (14) for circulating coolant fluid in at least one channel (15) in the cooling block (8),

circulating coolant in said at least one channel (15) in the cooling block (8) by feeding coolant fluid into said at least one channel (15) and by discharging coolant fluid from said at least one channel (15),

measuring the temperature $T_{in}$ of coolant fluid that is fed into said at least one channel (15),

measuring the temperature $T_{out}$ of coolant fluid that is discharged from said at least one channel (15),

measuring the volumetric flow $V_{out}$ of the coolant fluid in said at least one channel (15), calculating the heat loss Q of the coolant fluid in said at least one channel (15) in the cooling block (8) by using the temperature $T_{in}$ of coolant fluid that is fed into said at least one channel (15), the temperature $T_{out}$ of coolant fluid that is discharged from said at least one channel (15), and the volumetric flow $V_{out}$ of the coolant fluid in said at least one channel (15), and

controlling the outgrowth removal means (6) based on the calculated heat loss Q.

2. The method according to claim 1, **characterized by** moving the movable piston (7) of at least one outgrowth removal means (6) into the reaction shaft (1) to push possible outgrowth in the reaction shaft (1) by means of the movable piston (7) of said at least one outgrowth removal means (6) if the calculated heat loss Q goes below a pre-set value $Q_{set}$.

3. The method according to claim 1, **characterized by** moving the movable piston (7) of at least one outgrowth removal means (6) into the reaction shaft (1) to push possible outgrowth in the reaction shaft (1) by means of the movable piston (7) of said at least one outgrowth removal means (6) if an average heat loss $Q_{ave}$ calculated by using several calculated heat losses Q goes below a pre-set average value $Q_{aveset}$.

4. The method according to any of the claims 1 to 3, **characterized by** providing at least one opening (5) for a movable piston (7) of an outgrowth removal means (6) adjacent to the concentrate burner (4) at the top of the reaction shaft (1) of the suspension smelting furnace.

5. The method according to any of the claims 1 to 4, **characterized by** attaching the outgrowth removal means (6) at the concentrate burner (4).

6. The method according to any of the claims 1 to 5, **characterized by** using a pneumatic cylinder-piston-arrangement in the outgrowth removal means (6) for moving the movable piston (7) of at least one outgrowth removal means (6).

7. The method according to any of the claims 1 to 6, **characterized by** using a linear actuator such as a mechanical actuator, a hydraulic actuator, or a pneumatic actuator in the outgrowth removal means (6) for moving the movable piston (7) of at least one outgrowth removal means (6).

8. The method according to any of the claims 1 to 7, **characterized by** providing the outgrowth removal means (6) with a control arrangement (12) for actuating at least one outgrowth removal means (6) to moving the movable piston (7) of at least one outgrowth removal means (6) into the reaction shaft (1) for example with regular time-intervals.

9. An arrangement configured to remove outgrowth in a su spension smelting furnace comprising a reaction shaft (1) having a reaction shaft structure (9), and a concentrate burner (4) for feeding at least reaction gas and fine solids such as copper or nickel concentrate into the reaction shaft (1) of the suspension smelting furnace,

wherein the reaction shaft (1) comprises at least one opening (5) for an outgrowth removal means (6),

wherein at least one outgrowth removal means (6) comprising an outgrowth removal means (6) having a movable piston (7),

the movable piston (7) of said at least one outgrowth removal means (6) being arranged such that the movable piston (7) of said at least one outgrowth removal means (6) can move in the opening (5) in the reaction shaft (1) and into the reaction shaft (1) to push possible outgrowth in the reaction shaft (1) by means of the movable piston (7) of said at least one outgrowth removal means (6),

a cooling block (8) having an aperture (13) for the concentrate burner (4) and first fastening means (10) for fastening the concentrate burner (4) to the cooling block (8) and second fastening means (11) for fastening the cooling block (8) at the top of the reaction shaft (1) of the suspension smelting furnace,

the cooling block (8) being provided with at least one opening (5) for a movable piston (7) of an outgrowth removal means (6),

the cooling block (8) being arranged at the top of the reaction shaft (1) of the suspension smelting furnace so that the cooling block (8) is fastened to the reaction shaft structure (9) of the reaction shaft (1) of the suspension smelting furnace by using the second fastening means (11) and to the concentrate burner (4) by using the first fastening means (10) and so that the concentrate burner (4) extends into the reaction shaft (1),

the arrangement comprises coolant circulating means (14) for circulating coolant fluid in at least one channel (15) in the cooling block (8) by feeding coolant fluid into said at least one channel (15) and by discharging coolant fluid from said at least one channel (15),

the arrangement comprises first temperature measuring means (16) for measuring the temperature $T_{in}$ of coolant fluid that is fed into said at least one channel (15),

the arrangement comprises second temperature measuring means (17) for measuring the temperature $T_{out}$ of coolant fluid that is discharged from said at least one channel (15),

the arrangement comprises flow measuring means (19) for measuring the volumetric flow $V_{out}$ of coolant fluid in said at least one channel (15),

the arrangement comprises calculating means (18) for calculating heat loss Q of coolant fluid in said at least one channel (15) by using the temperature $T_{in}$ of coolant fluid that is fed into said at least one channel (15), the temperature $T_{out}$ of coolant fluid that is discharged from said at least one channel (15), and the volumetric flow $V_{out}$ of the coolant fluid in said at least one channel (15), and

the arrangement comprises a control arrangement (12) controlling the outgrowth removal means (6) based on the calculated heat loss Q calculated by the calculating means (18).

10. The arrangement according to claim 9, **characterized by** the control arrangement (12) being configured for controlling the outgrowth removal means (6) by moving the movable piston (7) of at least one outgrowth removal means (6) into the reaction shaft (1) to push possible outgrowth in the reaction shaft (1) by means of the movable piston (7) of said at least one outgrowth removal means (6) if the calculated heat loss Q goes below a pre-set value $Q_{set}$.

11. The arrangement according to claim 9, **characterized by** the control arrangement (12) being configured for controlling the outgrowth removal means (6) by moving the movable piston (7) of at least one outgrowth removal means (6) into the reaction shaft (1) to push possible outgrowth in the reaction shaft (1) by means of the movable piston (7) of said at least one outgrowth removal means (6) if an average heat loss $Q_{ave}$ calculated by using several calculated heat losses Q goes below a pre-set average value $Q_{aveset}$.

12. The arrangement according to any of the claims 9 to 11, **characterized by** at least one opening (5) for a movable piston (7) of an outgrowth removal means (6) adjacent to the concentrate burner (4) at the top of the reaction shaft (1) of the suspension smelting furnace.

13. The arrangement according to any of the claims 9 to 12, **characterized by** the outgrowth removal means (6) being attached to the concentrate burner (4).

14. The arrangement according to any of the claims 9 to 13, **characterized by** at least one outgrowth removal means (6) comprising a pneumatic cylinder-piston-arrangement for moving the movable piston (7) of said least one outgrowth removal means (6).

15. The arrangement according to any of the claims 9 to 14, **characterized by** at least one outgrowth removal means (6) comprising a linear actuator such as a mechanical actuator, a hydraulic actuator, or a pneumatic actuator for moving the movable piston (7) of said least one outgrowth removal means (6).

16. The arrangement according to any of the claims 9 to 15, **characterized by** the arrangement comprising a control arrangement (12) for actuating at least one outgrowth removal means (6) to moving the movable piston (7) of said least one outgrowth removal means (6) into the reaction shaft (1) for example with regular time-intervals.

**Patentansprüche**

1. Verfahren zur Beseitigung von Ablagerungen in einem Suspensionsschmelzofen, der einen Reaktionsschacht (1) mit einer Raktionsschachtstruktur (9) und einen Konzentratbrenner (4) zum Eintragen von mindestens Reaktionsgas und Feinfeststoffen wie Kupfer- oder Nickelkonzentrat in den Reaktionsschacht (1) des Suspensionsschmelzofens umfasst, wobei das Verfahren umfasst:

Versehen des Reaktionsschachts (1) mit mindestens einer Öffnung (5) für ein Ablagerungsbeseitigungsmittel (6),
Bereitstellen mindestens eines Ablagerungsbeseitigungsmittels (6) mit einem beweglichen Kolben (7),
Anordnen des beweglichen Kolbens (7) mindestens eines Ablagerungsbeseitigungsmittels (6) dergestalt, dass der bewegliche Kolben (7) des mindestens einen Ablagerungsbeseitigungsmittels (6) sich in der Öffnung (6) im Reaktionsschacht (1) und in den Reaktionsschacht (1) hinein bewegen kann,
Hineinbewegen des beweglichen Kolbens (7) mindestens eines Ablagerungsbeseitigungsmittels (6) in den Reaktionsschacht (1), um eventuelle Ablagerungen im Reaktionsschacht (1) mittels des beweglichen Kolbens (7) des mindestens einen Ablagerungsbeseitigungsmittels (6) wegzuschieben,
Bereitstellen eines Kühlblocks (8) mit einer Ausnehmung (13) für den Konzentratbrenner (4) und ersten Befestigungsmittels (10) zum Befestigen des Konzentratbrenners (4) am Kühlblock (8) und zweiten Befestigungsmitteln (11) zum Befestigen des Kühlblocks (8) an der Oberseite des Reaktionsschachts (1) des Suspensionsschmelzofens,
Versehen des Kühlblocks (8) mit mindestens einer Öffnung (5) für einen beweglichen Kolben (7) eines Ablagerungsbeseitigungsmittels (6),
Befestigen des Kühlblocks (8) an der Oberseite des Reaktionsschachts (1) des Suspensionsschmelzofens, so dass der Kühlblock (8) an der Reaktionsschachtstruktur (9) des Reaktionsschachts (1) des Suspensionsschmelzofens mit Hilfe der zweiten Befestigungsmittel (11) und am Konzentratbrenner (4) mit Hilfe der ersten Befestigungsmittel (10) befestigt wird und so dass der Konzentratbrenner (4) in den Reaktionsschacht (1) hineinragt,
Bereitstellen von Kühlmittelumwälzmitteln (14) zum Umwälzen von Kühlfluid in mindestens einem Kanal (15) im Kühlblock (8),
Umwälzen von Kühlmittel in dem mindestens einen Kanal (15) im Kühlblock (8) durch Eintragen von Kühlfluid in den mindestens einen Kanal (15) und durch Austragen von Kühlfluid aus dem mindestens einen Kanal (15),
Messen der Temperatur $T_{in}$ des Kühlfluids, das in den mindestens einen Kanal (15) eingetragen wird,
Messen der Temperatur $T_{out}$ des Kühlfluids, das aus dem mindestens einen Kanal (15) ausgetragen wird,
Messen des Volumenstroms $V_{out}$ des Kühlfluids in dem mindestens einen Kanal (15),
Berechnen des Wärmeverlusts Q des Kühlfluids in dem mindestens einen Kanal (15) im Kühlblock (8) mit Hilfe der Temperatur $T_{in}$ des in den mindestens einen Kanal (15) eingetragenen Kühlfluids, der Temperatur $T_{out}$ des aus dem mindestens einen Kanal (15) ausgetragenen Kühlfluids und des Volumenstroms $V_{out}$ des Kühlfluids in dem mindestens einen Kanal (15), und
Ansteuern des Ablagerungsbeseitigungsmittels (6) basierend auf dem berechneten Wärmeverlust Q.

2. Verfahren nach Anspruch 1, **gekennzeichnet durch**
Hineinbewegen des beweglichen Kolbens (7) mindestens eines Ablagerungsbeseitigungsmittels (6) in den Reaktionsschacht (1), um eventuelle Ablagerungen im Reaktionsschacht (1) mittels des beweglichen Kolbens (7) des mindestens einen Ablagerungsbeseitigungsmittels (6) wegzuschieben, falls der berechnete Wärmeverlust Q einen voreingestellten Wert $Q_{set}$ unterschreitet.

3. Verfahren nach Anspruch 1, **gekennzeichnet durch**
Hineinbewegen des beweglichen Kolbens (7) mindestens eines Ablagerungsbeseitigungsmittels (6) in den Reaktionsschacht (1), um eventuelle Ablagerungen im Reaktionsschacht (1) mittels des beweglichen Kolbens (7) des mindestens einen Ablagerungsbeseitigungsmittels (6) wegzuschieben, falls ein mit Hilfe von mehreren berechneten Wärmeverlusten Q berechneter durchschnittlicher Wärmeverlust $Q_{ave}$ einen voreingestellten

Durchschnittswert $Q_{aveset}$ unterschreitet.

4. Verfahren nach einem der Ansprüche 1 bis 3, **gekennzeichnet durch** Bereitstellen von mindestens einer Öffnung (5) für einen beweglichen Kolben (7) eines Ablagerungsbeseitigungsmittels (6) angrenzend zum Konzentratbrenner (4) an der Oberseite des Reaktionsschachts (1) des Suspensionsschmelzofens.

5. Verfahren nach einem der Ansprüche 1 bis 4, **gekennzeichnet durch** Anbringen des Ablagerungsbeseitigungsmittels (6) am Konzentratbrenner (4).

6. Verfahren nach einem der Ansprüche 1 bis 5, **gekennzeichnet durch** Verwenden einer pneumatischen Zylinder- Kolben-Anordnung im Ablagerungsbeseitigungsmittel (6) zum Bewegen des beweglichen Kolbens (7) mindestens eines Ablagerungsbeseitigungsmittels (6).

7. Verfahren nach einem der Ansprüche 1 bis 6, **gekennzeichnet durch** Verwenden eines linearen Aktors wie eines mechanischen Aktors, eines hydraulischen Aktors oder eines pneumatischen Aktors im Ablagerungsbeseitigungsmittel (6) zum Bewegen des beweglichen Kolbens (7) mindestens eines Ablagerungsbeseitigungsmittels (6).

8. Verfahren nach einem der Ansprüche 1 bis 7, **gekennzeichnet durch** Versehen des Ablagerungsbeseitigungsmittels (6) mit einer Steuerungsanordnung (12) zum Betätigen mindestens eines Ablagerungsbeseitigungsmittels (6), um den beweglichen Kolben (7) des mindestens einen Ablagerungsbeseitigungsmittels (6) beispielsweise in regelmäßigen Zeitintervallen in den Reaktionsschacht (1) hineinzubewegen.

9. Anordnung ausgelegt zum Beseitigen von Ablagerungen in einem Suspensionsschmelzofen, der einen Reaktionsschacht (1) mit einer Raktionsschachtstruktur (9) und einen Konzentratbrenner (4) zum Eintragen von mindestens Reaktionsgas und Feinfeststoffen wie Kupfer- oder Nickelkonzentrat in den Reaktionsschacht (1) des Suspensionsschmelzofens umfasst,
wobei der Reaktionsschacht (1) mindestens eine Öffnung (5) für ein Ablagerungsbeseitigungsmittel (6) umfasst, wobei
mindestens ein Ablagerungsbeseitigungsmittel (6) ein Ablagerungsbeseitigungsmittel (6) mit einem beweglichen Kolben (7) umfasst,
der bewegliche Kolben (7) des mindestens einen Ablagerungsbeseitigungsmittels (6) so angeordnet ist, dass der bewegliche Kolben (7) des mindestens einen Ablagerungsbeseitigungsmittels (6) sich in der Öffnung (5) im Reaktionsschacht (1) und in den Reaktionsschacht (1) hinein bewegen kann, um eventuelle Ablagerungen im Reaktionsschacht (1) mittels des beweglichen Kolbens (7) des mindestens einen Ablagerungsbeseitigungsmittels (6) wegzuschieben,
ein Kühlblock (8) eine Ausnehmung (13) für den Konzentratbrenner (4) und erste Befestigungsmittel (10) zum Befestigen des Konzentratbrenners (4) am Kühlblock (8) und zweite Befestigungsmittel (11) zum Befestigen des Kühlblocks (8) an der Oberseite des Reaktionsschachts (1) des Suspensionsschmelzofens aufweist,
der Kühlblock (8) mit mindestens einer Öffnung (5) für einen beweglichen Kolben (7) eines Ablagerungsbeseitigungsmittels (6) versehen ist,
der Kühlblock (8) an der Oberseite des Reaktionsschachts (1) des Suspensionsschmelzofens angeordnet ist, so dass der Kühlblock (8) an der Reaktionsschachtstruktur (9) des Reaktionsschachts (1) des Suspensionsschmelzofens mit Hilfe der zweiten Befestigungsmittel (11) und am Konzentratbrenner (4) mit Hilfe der ersten Befestigungsmittel (10) befestigt wird und so dass der Konzentratbrenner (4) in den Reaktionsschacht (1) hineinragt,
die Anordnung Kühlmittelumwälzmittel (14) umfasst, um Kühlfluid in mindestens einem Kanal (15) im Kühlblock (8) durch Eintragen von Kühlfluid in den mindestens einen Kanal (15) und durch Austragen von Kühlfluid aus dem mindestens einen Kanal (15) umzuwälzen,
die Anordnung erste Temperaturmessmittel (16) umfasst, um die Temperatur $T_{in}$ des in den mindestens einen Kanal (15) eingetragenen Kühlfluids zu messen,
die Anordnung zweite Temperaturmessmittel (17) umfasst, um die Temperatur $T_{out}$ des aus dem mindestens einen Kanal (15) ausgetragenen Kühlfluids zu messen,
die Anordnung Durchflussmengenmessmittel (19) umfasst, um den Volumenstrom $V_{out}$ des Kühlfluids in dem mindestens einen Kanal (15) zu messen,
die Anordnung Berechnungsmittel (18) umfasst, um den Wärmeverlust Q des Kühlfluids in dem mindestens einen Kanal (15) mit Hilfe der Temperatur $T_{in}$ des in den mindestens einen Kanal (15) eingetragenen Kühlfluids, der Temperatur $T_{out}$ des aus dem mindestens einen Kanal (15) ausgetragenen Kühlfluids und des Volumenstroms $V_{out}$ des Kühlfluids in dem mindestens einen Kanal (15) zu berechnen, und
die Anordnung eine Steuerungsanordnung (12) umfasst, die die Ablagerungsbeseitigungsmittel (6) basierend auf dem durch die Berechnungsmittel (18) berechneten Wärmeverlust Q ansteuert.

**10.** Anordnung nach Anspruch 9, **gekennzeichnet dadurch,**
**dass** die Steuerungsanordnung (12) zum Ansteuern des Ablagerungsbeseitigungsmittels (6) eingerichtet ist, indem sie den beweglichen Kolben (7) mindestens eines Ablagerungsbeseitigungsmittels (6) in den Reaktionsschacht (1) hineinbewegt, um eventuelle Ablagerungen im Reaktionsschacht (1) mittels des beweglichen Kolbens (7) des mindestens einen Ablagerungsbeseitigungsmittels (6) wegzuschieben, falls der berechnete Wärmeverlust Q einen voreingestellten Wert $Q_{set}$ unterschreitet.

**11.** Anordnung nach Anspruch 9, **gekennzeichnet dadurch,**
**dass** die Steuerungsanordnung (12) zum Ansteuern des Ablagerungsbeseitigungsmittels (6) eingerichtet ist, indem sie den beweglichen Kolben (7) mindestens eines Ablagerungsbeseitigungsmittels (6) in den Reaktionsschacht (1) hineinbewegt, um eventuelle Ablagerungen im Reaktionsschacht (1) mittels des beweglichen Kolbens (7) des mindestens einen Ablagerungsbeseitigungsmittels (6) wegzuschieben, falls ein mit Hilfe von mehreren berechneten Wärmeverlusten Q berechneter durchschnittlicher Wärmeverlust $Q_{ave}$ einen voreingestellten Durchschnittswert $Q_{aveset}$ unterschreitet.

**12.** Anordnung nach einem der Ansprüche 9 bis 11, **gekennzeichnet durch** mindestens eine Öffnung (5) für einen beweglichen Kolben (7) eines Ablagerungsbeseitigungsmittels (6) angrenzend zum Konzentratbrenner (4) an der Oberseite des Reaktionsschachts (1) des Suspensionsschmelzofens.

**13.** Anordnung nach einem der Ansprüche 9 bis 12, **gekennzeichnet dadurch, dass** das Ablagerungsbeseitigungsmittel (6) am Konzentratbrenner (4) angebracht ist.

**14.** Anordnung nach einem der Ansprüche 9 bis 13, **gekennzeichnet dadurch, dass** mindestens ein Ablagerungsbeseitigungsmittel (6) eine pneumatische Zylinder-Kolben-Anordnung zum Bewegen des beweglichen Kolbens (7) des mindestens eines Ablagerungsbeseitigungsmittels (6) umfasst.

**15.** Anordnung nach einem der Ansprüche 9 bis 14, **gekennzeichnet dadurch, dass** mindestens ein Ablagerungsbeseitigungsmittel (6) einen linearen Aktor wie einen mechanischen Aktor, einen hydraulischen Aktor oder einen pneumatischen Aktor zum Bewegen des beweglichen Kolbens (7) des mindestens einen Ablagerungsbeseitigungsmittels (6) umfasst.

**16.** Anordnung nach einem der Ansprüche 9 bis 15, **gekennzeichnet dadurch, dass** die Anordnung eine Steuerungsanordnung (12) umfasst, um mindestens ein Ablagerungsbeseitigungsmittel (6) so zu betätigen, dass der bewegliche Kolben (7) des mindestens einen Ablagerungsbeseitigungsmittels (6) beispielsweise in regelmäßigen Zeitintervallen in den Reaktionsschacht (1) hineinbewegt wird.

**Revendications**

**1.** Procédé d'élimination d'excroissances dans un four de fusion en suspension comprenant une cuve de réaction (1) ayant une structure de cuve de réaction (9), et un brûleur de concentré (4) pour introduire au moins un gaz réactionnel et des matières solides fines telles qu'un concentré de cuivre ou de nickel dans la cuve de réaction (1) du four de suspension en fusion, ledit procédé comprenant les étapes consistant à :

pourvoir la cuve de réaction (1) d'au moins un orifice (5) pour un moyen d'élimination d'excroissances (6),
prévoir au moins un moyen d'élimination d'excroissances (6) ayant un piston mobile (7),
disposer le piston mobile (7) d'au moins un moyen d'élimination d'excroissances (6) de façon que le piston mobile (7) dudit au moins un moyen d'élimination d'excroissances (6) puisse se déplacer dans l'orifice (5) dans la cuve de réaction (1) et jusqu'à l'intérieur de la cuve de réaction (1),
faire entrer le piston mobile (7) d'au moins un moyen d'élimination d'excroissances (6) dans la cuve de réaction (1) pour pousser d'éventuelles excroissances dans la cuve de réaction (1) moyennant le piston mobile (7) dudit au moins un moyen d'élimination d'excroissances (6),
prévoir un bloc de refroidissement (8) ayant un évidement (13) pour le brûleur de concentré (4) et de premiers moyens de fixation (10) pour fixer le brûleur de concentré (4) au bloc de refroidissement (8) et de deuxièmes moyens de fixation (11) pour fixer le bloc de refroidissement (8) à la partie supérieure de la cuve de réaction (1) du four de fusion en suspension,

pourvoir le bloc de refroidissement (8) d'au moins un orifice (5) pour un piston mobile (7) d'un moyen d'élimination d'excroissances (6),

fixer le bloc de refroidissement (8) à la partie supérieure de la cuve de réaction (1) du four de fusion en suspension de sorte que le bloc de refroidissement (8) soit fixé à la structure de cuve de réaction (9) de la cuve de réaction (1) du four de fusion en suspension à l'aide des deuxièmes moyens de fixation (11) et au brûleur de concentré (4) à l'aide des premiers moyens de fixation (10) et de sorte que le brûleur de concentré (4) s'étende dans la cuve de réaction (1),

prévoir un moyen de circulation de fluide de refroidissement (14) pour faire circuler un fluide de refroidissement dans au moins un canal (15) dans le bloc de refroidissement (8),

faire circuler le fluide de refroidissement dans ledit au moins un canal (15) dans le bloc de refroidissement (8) en introduisant le fluide de refroidissement dans ledit au moins canal (15) et en évacuant dudit au moins un canal (15) le fluide de refroidissement,

mesurer la température $T_{in}$ du fluide de refroidissement qui est introduit dans ledit au moins un canal (15),

mesurer la température $T_{out}$ du fluide de refroidissement qui est évacué dudit au moins un canal (15),

mesurer le débit volumétrique $V_{out}$ du fluide de refroidissement dans ledit au moins un canal (15),

calculer la perte de chaleur Q du fluide de refroidissement dans ledit au moins un canal (15) dans le bloc de refroidissement (8) à l'aide de la température $T_{in}$ du fluide de refroidissement qui est introduit dans ledit au moins un canal (15), de la température $T_{out}$ du fluide de refroidissement qui est évacué dudit au moins un canal (15), et du débit volumétrique $V_{out}$ du fluide de refroidissement dans ledit au moins un canal (15), et

piloter le moyen d'élimination d'excroissances (6) en fonction de la perte de chaleur calculée Q.

2. Procédé selon la revendication 1, **caractérisé par** l'étape consistant à
faire entrer le piston mobile (7) d'au moins un moyen d'élimination d'excroissances (6) dans la cuve de réaction (1) pour pousser d'éventuelles excroissances dans la cuve de réaction (1) moyennant le piston mobile (7) dudit au moins un moyen d'élimination d'excroissances (6), si la perte de chaleur calculée Q tombe en dessous d'une valeur préréglée $Q_{set}$.

3. Procédé selon la revendication 1, **caractérisé par** l'étape consistant à
faire entrer le piston mobile (7) d'au moins un moyen d'élimination d'excroissances (6) dans la cuve de réaction (1) pour pousser d'éventuelles excroissances dans la cuve de réaction (1) moyennant le piston mobile (7) dudit au moins un moyen d'élimination d'excroissances (6), si une perte de chaleur moyenne $Q_{ave}$ calculée à l'aide de plusieurs pertes de valeur calculées Q tombe en dessous d'une valeur moyenne préréglée $Q_{aveset}$.

4. Procédé selon l'une des revendications 1 à 3, **caractérisé par** l'étape consistant à prévoir au moins un orifice (5) pour un piston mobile (7) d'un moyen d'élimination d'excroissances (6) près du brûleur de concentré (4) dans la partie supérieure de la cuve de réaction (1) du four de fusion en suspension.

5. Procédé selon l'une des revendications 1 à 4, **caractérisé par** l'étape consistant à attacher le moyen d'élimination d'excroissances (6) au brûleur de concentré (4).

6. Procédé selon l'une des revendications 1 à 5, **caractérisé par** l'étape consistant à utiliser un ensemble cylindre-piston pneumatique dans le moyen d'élimination d'excroissances (6) pour mouvoir le piston mobile (7) d'au moins un moyen d'élimination d'excroissances (6).

7. Procédé selon l'une des revendications 1 à 6, **caractérisé par** l'étape consistant à utiliser un actionneur linéaire, tel qu'un actionneur mécanique, un actionneur hydraulique ou un actionneur pneumatique, dans le moyen d'élimination d'excroissances (6) pour mouvoir le piston mobile (7) d'au moins un moyen d'élimination d'excroissances (6).

8. Procédé selon l'une des revendications 1 à 7, **caractérisé par** l'étape consistant à pourvoir le moyen d'élimination d'excroissances (6) d'un agencement de pilotage (12) pour actionner au moins un moyen d'élimination d'excroissances (6) afin de faire entrer le piston mobile (7) d'au moins un moyen d'élimination d'excroissances (6) dans la cuve de réaction (1) par exemple à des intervalles de temps réguliers.

9. Agencement configuré pour l'élimination d'excroissances dans un four de fusion en suspension comprenant une cuve de réaction (1) ayant une structure de cuve de réaction (9), et un brûleur de concentré (4) pour introduire au moins un gaz réactionnel et des matières solides fines telles qu'un concentré de cuivre ou de nickel dans la cuve de réaction (1) du four de suspension en fusion,

ladite cuve de réaction (1) comprenant moins un orifice (5) pour un moyen d'élimination d'excroissances (6),

dans lequel

au moins un moyen d'élimination d'excroissances (6) comprend un moyen d'élimination d'excroissances (6) ayant un piston mobile (7),

le piston mobile (7) dudit au moins un moyen d'élimination d'excroissances (6) est disposé de façon que le piston mobile (7) dudit au moins un moyen d'élimination d'excroissances (6) puisse se déplacer dans l'orifice (5) dans la cuve de réaction (1) et jusqu'à l'intérieur de la cuve de réaction (1) pour pousser d'éventuelles excroissances dans la cuve de réaction (1) moyennant le piston mobile (7) dudit au moins un moyen d'élimination d'excroissances (6),

un bloc de refroidissement (8) a un évidement (13) pour le brûleur de concentré (4) et de premiers moyens de fixation (10) pour fixer le brûleur de concentré (4) au bloc de refroidissement (8) et de deuxièmes moyens de fixation (11) pour fixer le bloc de refroidissement (8) à la partie supérieure de la cuve de réaction (1) du four de fusion en suspension,

le bloc de refroidissement (8) est pourvu d'au moins un orifice (5) pour un piston mobile (7) d'un moyen d'élimination d'excroissances (6),

le bloc de refroidissement (8) est disposé à la partie supérieure de la cuve de réaction (1) du four de fusion en suspension de sorte que le bloc de refroidissement (8) soit fixé à la structure de cuve de réaction (9) de la cuve de réaction (1) du four de fusion en suspension à l'aide des deuxièmes moyens de fixation (11) et au brûleur de concentré (4) à l'aide des premiers moyens de fixation (10) et de sorte que le brûleur de concentré (4) s'étende dans la cuve de réaction (1),

l'agencement comprend des moyens de circulation de refroidissement (14) pour faire circuler le fluide de refroidissement dans au moins un canal (15) dans le bloc de refroidissement (8) en introduisant le fluide de refroidissement dans ledit au moins canal (15) et en évacuant dudit au moins un canal (15) le fluide de refroidissement,

l'agencement comprend de premiers moyens de mesure de température (16) pour mesurer la température $T_{in}$ du fluide de refroidissement qui est introduit dans ledit au moins un canal (15),

l'agencement comprend de deuxièmes moyens de mesure de température (17) pour mesurer la température $T_{out}$ du fluide de refroidissement qui est évacué dudit au moins un canal (15),

l'agencement comprend des moyens de mesure de débit (19) pour mesurer le débit volumétrique $V_{out}$ du fluide de refroidissement dans ledit au moins un canal (15),

l'agencement comprend des moyens de calcul (18) pour calculer la perte de chaleur Q du fluide de refroidissement dans ledit au moins un canal (15) à l'aide de la température $T_{in}$ du fluide de refroidissement qui est introduit dans ledit au moins un canal (15), de la température $T_{out}$ du fluide de refroidissement qui est évacué dudit au moins un canal (15) et du débit volumétrique $V_{out}$ du fluide de refroidissement dans ledit au moins un canal (15), et

l'agencement comprend un agencement de pilotage (12) pilotant le moyen d'élimination d'excroissances (6) en fonction de la perte de chaleur Q calculée par les moyens de calcul (18).

10. Agencement selon la revendication 9, **caractérisé en ce que**
l'agencement de pilotage (12) est configuré pour piloter le moyen d'élimination d'excroissances (6) en faisant entrer le piston mobile (7) d'au moins un moyen d'élimination d'excroissances (6) dans la cuve de réaction (1) pour pousser d'éventuelles excroissances dans la cuve de réaction (1) moyennant le piston mobile (7) dudit au moins un moyen d'élimination d'excroissances (6), si la perte de chaleur calculée Q tombe en dessous d'une valeur préréglée $Q_{set}$.

11. Agencement selon la revendication 9, **caractérisé en ce que**
l'agencement de pilotage (12) est configuré pour piloter le moyen d'élimination d'excroissances (6) en faisant entrer le piston mobile (7) d'au moins un moyen d'élimination d'excroissances (6) dans la cuve de réaction (1) pour pousser d'éventuelles excroissances dans la cuve de réaction (1) moyennant le piston mobile (7) dudit au moins un moyen d'élimination d'excroissances (6), si une perte de chaleur moyenne $Q_{ave}$ calculée à l'aide de plusieurs pertes de valeur calculées Q tombe en dessous d'une valeur moyenne préréglée $Q_{aveset}$.

12. Agencement selon l'une des revendications 9 à 11, **caractérisé par** au moins un orifice (5) pour un piston mobile (7) d'un moyen d'élimination d'excroissances (6) près du brûleur de concentré (4) dans la partie supérieure de la cuve de réaction (1) du four de fusion en suspension.

13. Agencement selon l'une des revendications 9 à 12, **caractérise en ce que** le moyen d'élimination d'excroissances (6) est attaché au brûleur de concentré (4).

14. Agencement selon l'une des revendications 9 à 13, **caractérisé en ce qu'**au moins un moyen d'élimination d'excroissances (6) comprend un ensemble cylindre-piston pneumatique pour mouvoir le piston mobile (7) dudit au moins un moyen d'élimination d'excroissances (6).

**15.** Agencement selon l'une des revendications 9 à 14, **caractérisé en ce qu'**au moins un moyen d'élimination d'excroissances (6) comprend un actionneur linéaire, tel qu'un actionneur mécanique, un actionneur hydraulique ou un actionneur pneumatique, pour mouvoir le piston mobile (7) dudit moins un moyen d'élimination d'excroissances (6).

**16.** Agencement selon l'une des revendications 9 à 15, **caractérisé en ce que** l'agencement comprend un agencement de pilotage (12) pour actionner au moins un moyen d'élimination d'excroissances (6) afin de faire entrer le piston mobile (7) dudit au moins un moyen d'élimination d'excroissances (6) dans la cuve de réaction (1) par exemple à des intervalles de temps réguliers.

FIG 1

FIG 2

8

13

5

FIG 3

18

14

19

17

15

F

T_out

T_in

16

8

13

5

FIG 4

FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012001238 A

- FI 22694